Europäisches Patentamt

European Patent Office

Office européen des brevets

(19)

(11) Publication number: **0 349 086**

**A1**

(12) **EUROPEAN PATENT APPLICATION**

(21) Application number: **89201704.7**

(22) Date of filing: **27.06.89**

(51) Int. Cl.⁴: **G05B 19/04**

(30) Priority: **29.06.88 NL 8801653**

(43) Date of publication of application:
**03.01.90 Bulletin 90/01**

(84) Designated Contracting States:
**AT BE CH DE ES FR GB GR IT LI LU NL SE**

(71) Applicant: **STORK KWANT B.V.**
**Voltastraat 3**
**NL-8606 JW Sneek(NL)**

(72) Inventor: **Visser, Nicolaas Jozef**
**Brunostraat 38**
**NL-8701 XM Bolsward(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Control system.**

(57) An electronic processing circuit 17 compares digital signals representing the position of a number of mutually connected operating members to the contents of an electronic memory 18. On detecting a difference indicating the adjustment of the position of one of the operating members, the circuit 17 actuates those motors of motors 4, 5, 6 which are associataed with the non-adjusted operating members in order to make them follow the adjustment. Excessive adjustments indicating a disturbance are shown on an indicator 19.

FIG. 1

## CONTROL SYSTEM

The invention relates to a control system consisting of a number of operating members that are connected mutually and to a device for operation, whereby each operating member is coupled to an associated feeding element in the form of a potentiometer, a follower member with an adjustable motor is added to each operating member to cause the other operating members to follow when an operating member is adjusted, and a memory for storing the position of the last adjusted operating member.

Such a control system is known from the Netherlands patent specification 179.421. In the known control system the memory is formed by a potentiometer added to each feeding element. The position of the potentiometer shows the position of the last adjusted operating member. Should an operating member be actuated the added potentiometers then follow the adjustment, which new position then serves as reference during a subsequent adjustment of one of the operating members. On the basis of the difference between the reference value and the momentary adjusted position of the operating member an error signal is formed which serves as control signal to bring about following of the remaining operating members and the associated potentiometers serving as memory.

Potentiometers are comparatively bulky and expensive, while the accuracy of the adjustment is also limited.

The invention has for its object to obviate these drawbacks. This is achieved according to the invention in that the memory is formed by an electronic memory recording a digital value and in that means are arranged for adapting the content of the memory to the position of an operating member.

As a result of the invention the stated drawbacks are overcome since the adapting of the reference value stored in the electronic memory can be performed rapidly while its size is moreover limited. Such a memory and the associated control circuits can furthermore be integrated into the circuit means, amplifiers and the like already available.

In order to obtain the digital signals each feeding element is connected to the memory via an analog-digital converter.

In the case of a control system whereby control signals for causing operating members to follow are first formed when a predetermined difference is exceeded between the value stored in the memory and the value representing the position of an adjusted operating member, in accordance with the invention the predetermined difference for the last adjusted operating member is chosen smaller than that for the other operating members. A certain priority results which enables the possibility that the last adjusted operating member can still be adjusted for small differences by a fine-adjustment.

The electronic embodiment of the memory according to the invention also makes it possible to form control signals for a disturbance indicator when predetermined values are exceeded. When the formed signals display abnormal behaviour this indicates a disturbance and this can be indicated in a simple manner.

The invention will be elucidated with reference to a diagram of an embodiment as according to the annexed drawings.

Connected to each operating member is a feeding element in the form of the respective potentiometers 1, 2 and 3. Added to each operating member is a follower member in the form of the respective adjustable motors 4, 5 and 6. By means of the analog-digital converter 16 the position of the potentiometers 1, 2 and 3 is continually sampled and passed via the electronic processing circuit 17 to a suitable place in the memory 18. When one of the operating members is adjusted a difference will be detected by the electronic processing unit 17 between the momentary sampled value of the potentiometer added to the relevant operating member and the values stored in the memory 18. On the basis of this difference a control signal is formed which brings about rotation of the adjustable motors 4, 5 and 6 which are associated with the other operating members in the correct direction and over the correct distance. Because the couplings associated with the motors are energized, that is, those couplings of the couplings 7, 8 and 9 which are associated with the non-actuated operating members, the other operating members are adjusted through the relevant amplifiers. Associated with each operating member are the respective amplifiers 13, 14 and 15. The motors 4, 5 and 6 are coupled through the respective circuits 10, 11 and 12 to the electronic processing unit 17 in order to be able to feed the correct control signals to the relevant motors. During the control process the reference value in the memory 18 is also adapted to the adjustment of the operating members so that, as is usual in a control process, the error or control signal takes a continually smaller value until the differential value between feed potentiometer and feed back potentiometer lies below a set value ("dead" band).

When abnormal values are detected in the electronic processing unit 17, which indicates a disturbance, this is shown on the indicator 19 which generates an audio or visual signal to the user.

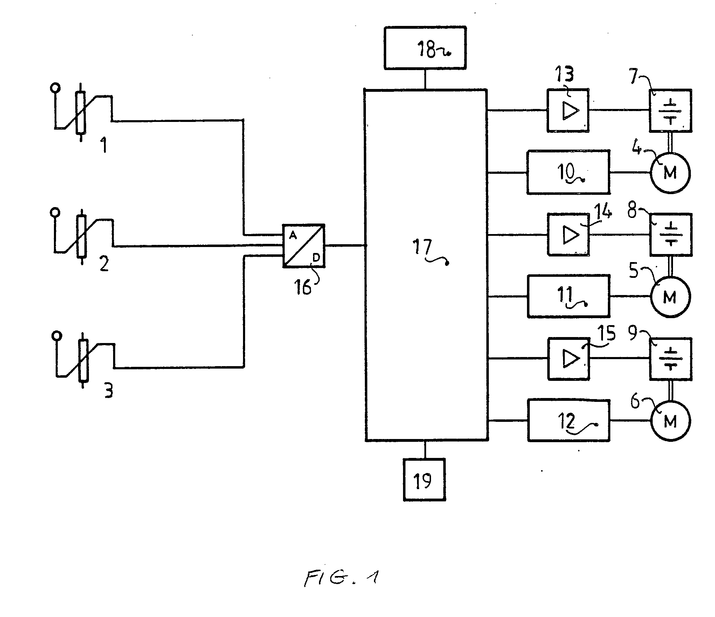

## Claims

1. Control system consisting of a number of operating members that are connected mutually and to a device for operation, whereby each operating member is coupled to an associated feeding element (1, 2, 3) in the form of a potentiometer, a follower member with an adjustable motor (4, 5, 6) is added to each operating member to cause the other operating members to follow when an operating member is adjusted, and a memory (18) for storing the position of the last adjusted operating member, **characterized in that** said memory (18) is formed by an electronic memory recording a digital value and in that means (17) are arranged for adapting the content of said memory to the position of an operating member.

2. Control system as claimed in claim 1, **characterized in that** each feeding element is connected to the memory through an analog-digital converter (16).

3. Control system as claimed in claim 1, whereby control signals for causing operating members to follow are first formed when a predetermined difference is exceeded between the value stored in the memory (18) and the value representing the position of an adjusted operating member, **characterized in that** the predetermined difference for the last adjusted operating member is smaller than that of the other operating members.

FIG. 1

European Patent Office

**EUROPEAN SEARCH REPORT**

Application Number

EP    89 20 1704

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,D | NL-A-7601464 (STORK KWANT B.V.)<br>* page 2, line 16 - page 3, line 29; figure 1 *<br>--- | 1-3 | G05B19/04 |
| Y | DE-A-1763450 (LICENCIA PATENT-VERWALTUNGS-GMBH)<br>* page 2, line 13 - page 3, line 13; figure 1 *<br>----- | 1-3 | |

TECHNICAL FIELDS SEARCHED (Int. Cl.5 )

G05B
G05D

The present search report has been drawn up for all claims

| Place of search | Date of completion of the search | Examiner |
|---|---|---|
| THE HAGUE | 04 SEPTEMBER 1989 | GOETZ P.A. |

EPO FORM 1503 03.82 (P0401)